# EUROPEAN PATENT APPLICATION

(11) **EP 4 371 805 A1**
(43) Date of publication of application: **22.05.2024**
(21) Application number: 23203028.8
(22) Date of filing: 11.10.2023
(51) Int. Cl.: B60L 53/24, B60L 53/66

(54) **BATTERY ELECTRIC VEHICLE AND CHARGING CONTROL METHOD FOR STORAGE BATTERY OF BATTERY ELECTRIC VEHICLE**

(30) Priority: 17.11.2022 JP 2022184094
(71) Applicant: TOYOTA JIDOSHA KABUSHIKI KAISHA, Toyota-shi, Aichi-ken, 471-8571 (JP)
(72) Inventor: SHIMO, Yuichi, TOYOTA-SHI, AICHI-KEN, 471-8571 (JP)
(74) Representative: Cabinet Beau de Loménie

(57) **Abstract**

A battery electric vehicle (100) includes a storage battery (2), an electric power conversion device (3), a motor (4), a connector (5), a rotational angle sensor (6), and a control device (8). The control device (8) is configured to control a charging station (9) such that a predetermined charging current is output when a rotational angle of the motor (4) is a torque non-generating rotational angle at which no torque is generated in the motor (4) at a time of supplying a charging current to a neutral point of the motor (4). The control device (8) is configured to control the charging station (9) such that a charging current that is smaller than the predetermined charging current is output when the rotational angle of the motor (4) is not the torque non-generating rotational angle.

## Description

### BACKGROUND OF THE INVENTION

### 1. Field of the Invention

The present disclosure relates to a battery electric vehicle that is equipped with a storage battery and that travels using electricity as driving power, and to a charging control method for the storage battery.

### 2. Description of Related Art

Japanese Patent No. 5735782 (JP 5735782 B) discloses a charging device for a hybrid electric vehicle. The charging device disclosed in JP 5735782 B is configured to charge a storage battery using a drive motor and an inverter, by externally supplying a charging current to a neutral point of the drive motor.

### SUMMARY OF THE INVENTION

When a charging current is supplied to the neutral point of the drive motor as disclosed in JP 5735782 B, starting charging with a high output at the time of performing charging entails a risk that torque will be generated in the drive motor and the vehicle will start moving.

Accordingly, the present disclosure provides a battery electric vehicle and a charging control method for a storage battery of the battery electric vehicle that can suppress vehicle behavior by controlling output of the charging current at the time of performing charging.

A first aspect of the present disclosure is a battery electric vehicle. A battery electric vehicle includes a storage battery, an electric power conversion device that is electrically connected to the storage battery, a motor that is electrically connected to the electric power conversion device, a connector that is electrically connected to a neutral point of the motor and that is configured to receive connection of a charging plug of a charging station, a rotational angle sensor that is configured to measure a rotational angle of the motor, and a control device that is configured to communicate with the charging station in a state in which the charging plug is connected to the connector, and to control the charging station based on a measurement result of the rotational angle sensor. The control device is configured to control the charging station such that a predetermined charging current is output when the rotational angle of the motor is a torque non-generating rotational angle at which no torque is generated in the motor at a time of supplying a charging current to the neutral point. The control device is configured to control the charging station such that a charging current that is smaller than the predetermined charging current is output when the rotational angle of the motor is not the torque non-generating rotational angle.

In the battery electric vehicle, the control device may be configured to control the charging station such that the greater a difference between the rotational angle of the motor and the torque non-generating rotational angle is, a smaller charging current is output.

A second aspect of the present disclosure is a charging control method for a storage battery of a battery electric vehicle. In this charging control method, in a battery electric vehicle that includes a storage battery, an electric power conversion device that is electrically connected to the storage battery, a motor that is electrically connected to the electric power conversion device, a connector that is electrically connected to a neutral point of the motor and that is configured to receive connection of a charging plug of a charging station, a rotational angle sensor that is configured to measure a rotational angle of the motor, and a control device that is configured to communicate with the charging station in a state in which the charging plug is connected to the connector, in which charging of the storage battery is controlled by the control device. This charging control method causes the control device to execute measuring the rotational angle of the motor, determining whether the rotational angle is a torque non-generating rotational angle at which no torque is generated in the motor at a time of supplying a charging current to the neutral point, controlling the charging station to output a predetermined charging current when the rotational angle is the torque non-generating rotational angle, and controlling the charging station such that a charging current that is smaller than the predetermined charging current is output when the rotational angle is not the torque non-generating rotational angle.

In the charging control method, when the rotational angle is not the torque non-generating rotational angle, the control device may execute controlling the charging station such that the greater a difference between the rotational angle of the motor and the torque non-generating rotational angle is, a smaller charging current is output.

According to the present disclosure, when charging the battery electric vehicle, the vehicle can be suppressed from starting to move.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram of a charging circuit installed inside a battery electric vehicle according to an embodiment;
FIG. 2A is a graph showing a relation among magnitude of charging current during charging, behavior of the vehicle, magnitude of generated torque, and elapsed time, according to related art;
FIG. 2B is a graph showing a relation among magnitude of charging current during charging, behavior of the vehicle, magnitude of generated torque, and elapsed time, according to the embodiment;
FIG. 3 shows a comparison between the related art and the embodiment regarding a relation between rotational angle of a motor and the magnitude of generated torque;
FIG. 4A shows control performed by a control device, which is executed at the time of starting charging when the rotational angle of the motor is at a torque non-generating rotational angle, with regard to temporal change of the magnitude of the charging current, the magnitude of torque that is generated, and the behavior of the vehicle, in accordance with the rotational angle of the motor, according to the embodiment;
FIG. 4B shows control performed by the control device, which is executed at the time of starting charging when the rotational angle of the motor is at a halfway rotational angle between two torque non-generating rotational angles that are adjacent, with regard to temporal change of the magnitude of the charging current, the magnitude of torque that is generated, and the behavior of the vehicle, in accordance with the rotational angle of the motor, according to the embodiment; and
FIG. 5 shows a charging control method for a storage battery of the battery electric vehicle according to the embodiment.

### DETAILED DESCRIPTION OF EMBODIMENTS

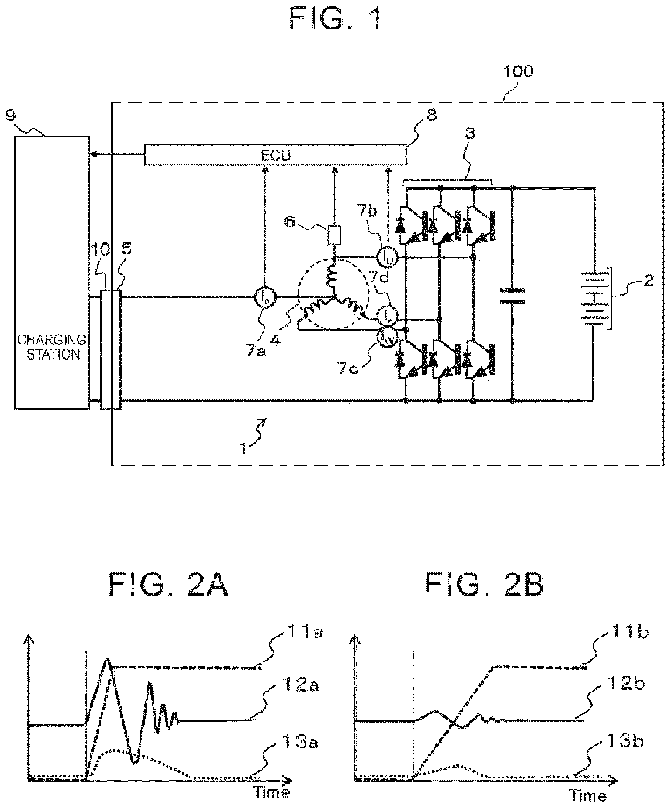

FIG. 1 is a diagram of a charging circuit 1 installed inside a battery electric vehicle 100 according to an embodiment.

The charging circuit 1 includes a storage battery 2, an electric power conversion device 3, a motor 4, a connector 5, a rotational angle sensor 6, and current sensors 7a, 7b, 7c and 7d. The charging circuit 1 is also connected to a control device 8. At the time of charging, the charging circuit 1 is connected to a charging station 9 which is a direct current power source, and charges the storage battery 2. Specifically, the charging circuit 1 receives supply of charging current from the charging station 9 connected to the connector 5, boosts voltage of the charging current by the motor 4 and the electric power conversion device 3, and supplies the boosted charging current to the storage battery. 2. The charging current that is output from the charging station 9 is controlled by the control device 8.

The storage battery 2 is formed by consecutively connecting a plurality of storage cells. Specifically, the storage battery 2 is a battery that is rechargeable, such as a lithium-ion battery.

The electric power conversion device 3 is electrically connected to the storage battery 2 and the motor 4. While the vehicle is traveling, the electric power conversion device 3 converts current stored in the storage battery 2 from direct current to alternating current, and supplies the alternating current to the motor 4. While charging, the electric power conversion device 3 operates collaboratively with the motor 4 to boost the charging current supplied from the charging station 9.

The motor 4 generates torque by being supplied with electric power from the storage battery 2 while the vehicle is traveling, and uses the generated torque as a motive power source to run the vehicle. While charging, the motor 4 is electrically connected to the charging station 9 via the connector 5 and is supplied with the charging current from the charging station 9.

The motor 4 has coils of three phases, and when alternating current flows into each coil, a magnetic field that changes over time is generated inside the coils. The magnetic field generates motive power to rotate in a certain direction, whereby the motor 4 functions. Also, while charging, the charging current is supplied to a neutral point of the motor 4. The charging current that is supplied is supplied to the electric power conversion device 3 through the coils. When the charging current supplied to the neutral point flows through the coils, there are cases in which torque is generated in the motor 4, depending on a rotational angle of the motor 4, i.e., a rotational angle of a rotor with respect to a stator.

The connector 5 is equipment for electrically connecting the charging station 9 and the charging circuit 1. Specifically, the connector 5 is a device for connecting a charging plug 10 provided to the charging station 9 and the charging circuit 1, to enable charging by the charging station 9. Further, the connector 5 is connected to the neutral point of the motor 4.

The rotational angle sensor 6 is connected to the motor 4 and measures the rotational angle of the motor 4. The rotational angle sensor 6 also transmits information regarding the measured rotational angle of the motor 4 to the control device 8.

The current sensors 7a to 7d are connected to the neutral point of the motor 4, and can be classified into a neutral point current sensor 7a for measuring the current flowing at the neutral point, and phase current sensors 7b, 7c, and 7d for measuring the current flowing through each phase of the motor 4. Each current sensor 7a to 7d transmits information regarding the current values that are measured to the control device 8.

The control device 8 communicates with the charging station 9, and controls magnitude of the charging current output by the charging station 9. Charging by the charging station 9 is performed in a state in which the charging plug 10 is connected to the connector 5 of the charging circuit 1. Communication between the control device 8 and the charging station 9 is performed by, for example, a communication cable. The charging plug 10 and the connector 5 can be used for connection of the communication cable.

Control of the charging current output from the charging station 9 by the control device 8 is performed based on results of the measurement performed by the rotational angle sensor 6. Specifically, the control device 8 performs the following two types of control, i.e., first and second control, with regard to the charging station 9. The first control is performed when the rotational angle of the motor 4 is a torque non-generating rotational angle, and the control device 8 controls the charging station 9 to output a predetermined charging current. A torque non-generating rotational angle is defined as a rotational angle at which no torque is generated in the motor 4 when charging current is supplied to the neutral point of the motor 4. The second control is performed when the rotational angle of the motor 4 is not a torque non-generating rotational angle, and the control device 8 controls the charging station 9 to output a charging current that is smaller than the predetermined charging current.

Controlling the charging current output by the charging station 9 as described above can yield the effects such as shown in FIGS. 2A and 2B in comparison with the related art. FIG. 2A is a graph showing a relation among magnitude of charging current during charging, behavior of the vehicle, magnitude of generated torque, and elapsed time, according to the related art. FIG. 2B is a graph showing a relation among the magnitude of the charging current during charging, the behavior of the vehicle, the magnitude of the generated torque, and elapsed time, according to the embodiment.

In FIG. 2A, the horizontal axis of the graph indicates elapsed time. The vertical axis indicates the magnitude of each parameter. On the vertical axis, line 11a indicates the magnitude of the charging current. On the vertical axis, line 12a indicates the vehicle behavior, i.e., the magnitude of acceleration generated in the vehicle. On the vertical axis, line 13a indicates the magnitude of the torque generated by the motor 4.

In the related art shown in FIG. 2A, the charging station 9 outputs a predetermined charging current immediately after starting charging, to charge the battery electric vehicle 100. Therefore, as the charging current is supplied, torque is generated in the motor 4, and the vehicle behavior of the battery electric vehicle 100 may become irregular. That is to say, the battery electric vehicle 100 may start moving due to a sudden increase in the charging current at the start of charging.

The vertical axis and the horizontal axis in FIG. 2B respectively indicate the magnitude of each parameter, and the elapsed time, in the same way as in FIG. 2A. On the vertical axis, line 11b indicates the magnitude of the charging current, line 12b indicates the magnitude of the vehicle behavior, and line 13b indicates the magnitude of the torque generated by the motor 4.

In the measurement results according to the present embodiment shown in FIG. 2B, upon receiving a request from the control device 8, the charging station 9 gradually increases the charging current. In this case, the torque generated by the motor 4 is suppressed as compared to line 13a in FIG. 2A according to the related art. Suppressing the torque generated by the motor 4 also suppresses the behavior of the vehicle, and as a result, the battery electric vehicle 100 does not readily move during charging.

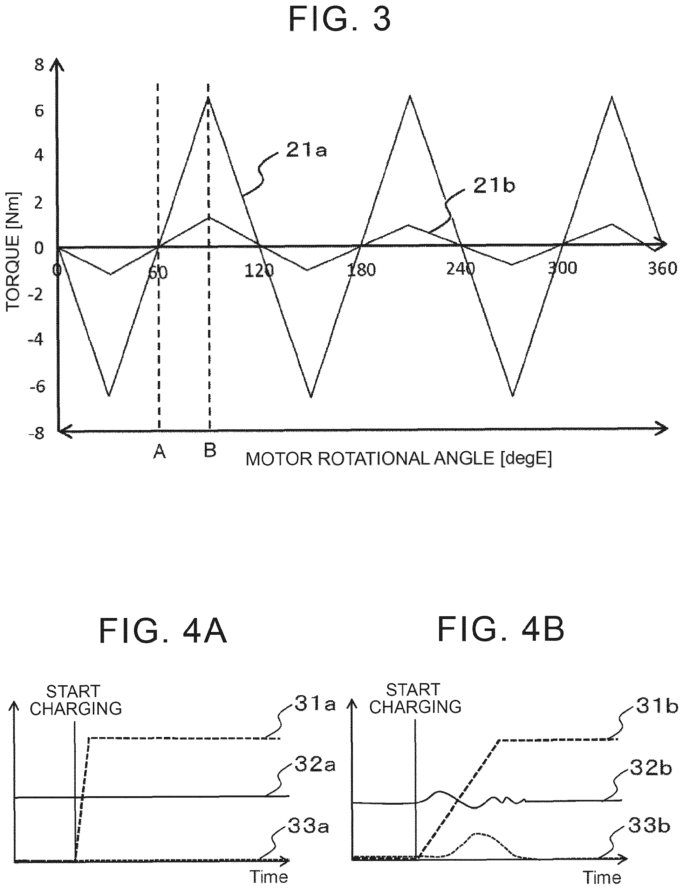

FIG. 3 shows a comparison between the related art and the present embodiment regarding a relation between the rotational angle of the motor 4 and the magnitude of generated torque. Specifically, line 21a in FIG. 3 shows the relation between the rotational angle of the motor 4 and the magnitude of the generated torque according to the related art. Line 21b in FIG. 3 shows the relation between the rotational angle of the motor 4 and the magnitude of the generated torque according to the present embodiment.

In line 21a according to the related art and line 21b according to the present embodiment, a rotational angle of the motor 4 reaches a rotational angle A at which the generated torque becomes 0, at intervals of 60° starting from 0°, and reaches a rotational angle B at which the generated torque peaks, at intervals of 60° starting from 30°. The rotational angle A is a torque non-generating rotational angle. In the related art, the predetermined charging current is supplied to the neutral point regardless of whether the rotational angle is the torque non-generating rotational angle. Accordingly, the magnitude of the torque generated by the motor 4 increases as the distance from the torque non-generating rotational angle increases, and excessive torque is generated at the rotational angle B that is the farthest from the torque non-generating rotational angle.

According to the charging current control of the present embodiment, the predetermined charging current is output from the charging station 9 at the rotational angle A, which is the torque non-generating rotational angle. At the torque non-generating rotational angle, no torque is generated in the motor 4 regardless of the magnitude of the charging current flowing at the neutral point. At angles other than the rotational angle A, at which the rotational angle of the motor 4 is not the torque non-generating rotational angle, the charging station 9 outputs a charging current smaller than the predetermined charging current. Suppressing the charging current so as to be lower than the predetermined charging current suppresses the magnitude of the torque generated by the motor 4, even at rotational angles other than the torque non-generating rotational angle.

FIGS. 4A and 4B show changes over time in the magnitude of the charging current, the magnitude of the generated torque, and the vehicle behavior, in accordance with the rotational angle, according to the present embodiment. FIG. 4A shows control that is executed by the control device 8 when charging is started with the rotational angle of the motor 4 at the torque non-generating rotational angle (rotational angle A shown in FIG. 3). Line 31a indicates the magnitude of the charging current, line 32a indicates the vehicle behavior, and line 33a indicates the generated torque. The generated torque is 0 at the torque non-generating rotational angle, and accordingly the control device 8 controls the charging station 9 to output the predetermined charging current.

FIG. 4B shows control that is executed by the control device 8 when charging is started with the rotational angle of the motor 4 at an intermediate rotational angle between two torque non-generating rotational angles that are adjacent (rotational angle B shown in FIG. 3). Line 31b indicates the magnitude of the charging current, line 32b indicates the vehicle behavior, and line 33b indicates the generated torque. The torque generated at a halfway rotational angle between the torque non-generating rotational angles is greatest, and accordingly the control device 8 controls the charging station 9 to output a charging current smaller than the predetermined charging current.

Also, the control device 8 controls the charging station 9 to output a smaller charging current the greater the difference between the rotational angle of the motor 4 and the torque non-generating rotational angle is. That is to say, in the example shown in FIG. 3, the control device 8 reduces the charging current output by the charging station 9 from the rotational angle A to the rotational angle B. Accordingly, the behavior of the vehicle during charging can be further suppressed while ensuring a certain amount of supply of charging current.

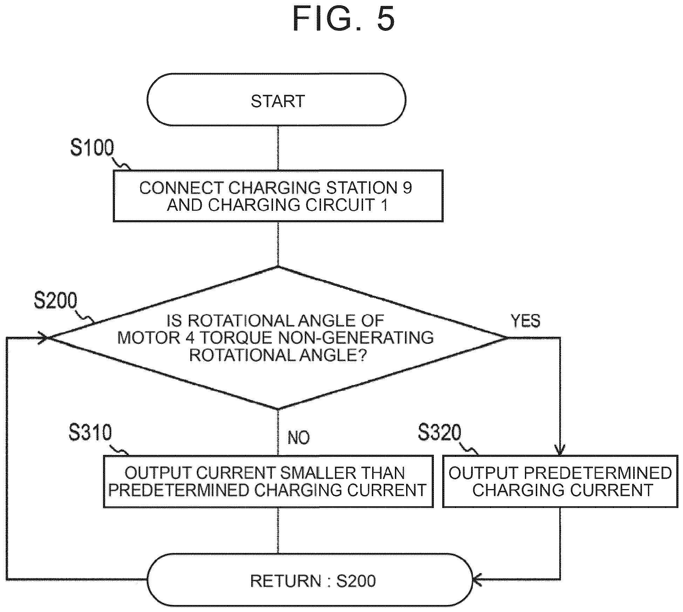

FIG. 5 shows a charging control method for the storage battery 2 of the battery electric vehicle 100 according to the present embodiment.

In step S100, the charging station 9 and the charging circuit 1 are connected by the charging plug 10 and the connector 5.

In step S200, the control device 8 determines whether the rotational angle of the motor 4 is a torque non-generating rotational angle. When the rotational angle of the motor 4 is not the torque non-generating rotational angle, the processing advances to step S310. When the rotational angle of the motor 4 is the torque non-generating rotational angle, the processing advances to step S320.

In step S310, the rotational angle of the motor 4 is not the torque non-generating rotational angle, and accordingly the control device 8 controls the charging station 9 so that a charging current smaller than the predetermined charging current is output. The processing returns to step S200.

In step S320, the rotational angle of the motor 4 is the torque non-generating rotational angle, and accordingly the control device 8 controls the charging station 9 so that the predetermined charging current is output. The processing returns to step S200.

As described above, according to the battery electric vehicle 100 of the present embodiment, the charging current output from the charging station 9 is controlled based on the rotational angle of the motor 4, thereby suppressing movement of the battery electric vehicle 100 during charging.

## Claims

1. A battery electric vehicle (100), comprising:
a storage battery (2);
an electric power conversion device (3) that is electrically connected to the storage battery (2);
a motor (4) that is electrically connected to the electric power conversion device (3);
a connector (5) that is electrically connected to a neutral point of the motor (4) and that is configured to receive connection of a charging plug (10) of a charging station (9);
a rotational angle sensor (6) that is configured to measure a rotational angle of the motor (4); and
a control device (8) that is configured to communicate with the charging station (9) in a state in which the charging plug (10) is connected to the connector (5), and to control the charging station (9) based on a measurement result of the rotational angle sensor (6), wherein
the control device (8) is
configured to control the charging station (9) such that a predetermined charging current is output when the rotational angle of the motor (4) is a torque non-generating rotational angle at which no torque is generated in the motor (4) at a time of supplying a charging current to the neutral point, and is
configured to control the charging station (9) such that a charging current that is smaller than the predetermined charging current is output when the rotational angle of the motor (4) is not the torque non-generating rotational angle.

2. The battery electric vehicle (100) according to claim 1, wherein the control device (8) is configured to control the charging station (9) such that the greater a difference between the rotational angle of the motor (4) and the torque non-generating rotational angle is, a smaller charging current is output.

3. A charging control method for a storage battery (2) of a battery electric vehicle (100),
the battery electric vehicle (100) including
the storage battery (2),
an electric power conversion device (3) that is electrically connected to the storage battery (2),
a motor (4) that is electrically connected to the electric power conversion device (3),
a connector (5) that is electrically connected to a neutral point of the motor (4) and that is configured to receive connection of a charging plug (10) of a charging station (9), a rotational angle sensor (6) that is configured to measure a rotational angle of the motor (4), and
a control device (8) that is configured to communicate with the charging station (9) regarding which the charging plug (10) is connected to the connector (5), the control device (8) being configured to control charging of the storage battery (2) by executing the charging control method, the charging control method comprising:
measuring, by the control device (8), the rotational angle of the motor (4);
determining, by the control device (8), whether the rotational angle is a torque non-generating rotational angle at which no torque is generated in the motor (4) at a time of supplying a charging current to the neutral point;
controlling, by the control device (8), the charging station (9) to output a predetermined charging current when the rotational angle is the torque non-generating rotational angle; and
controlling, by the control device (8), the charging station (9) such that a charging current that is smaller than the predetermined charging current is output when the rotational angle is not the torque non-generating rotational angle.

4. The charging control method according to claim 3, wherein, when the rotational angle is not the torque non-generating rotational angle, the control device (8) executes controlling the charging station (9) such that the greater a difference between the rotational angle of the motor (4) and the torque non-generating rotational angle is, a smaller charging current is output.
